# EUROPEAN PATENT SPECIFICATION

(11) **EP 3 334 595 B1**
(45) Date of publication and mention of the grant of the patent: **01.12.2021**
(21) Application number: 16753555.8
(22) Date of filing: 10.08.2016
(51) Int. Cl.: B32B 7/04, B32B 27/12

(54) **COMPOSITE FABRIC INCLUDING STRUCTURED FILM AND METHOD OF FORMING SAME**
VERBUNDGEWEBE MIT STRUKTURIERTEM FILM UND VERFAHREN ZUR FORMUNG DAVON
TISSU COMPOSITE COMPRENANT UN FILM STRUCTURÉ, ET SON PROCÉDÉ DE FORMATION

(30) Priority: 14.08.2015 US 201562205417 P
(43) Date of publication of application: 20.06.2018
(73) Proprietor: 3M Innovative Properties Company, St. Paul, MN 55133-3427 (US)
(72) Inventor: GILBERT, Thomas J., Saint Paul, Minnesota 55133-3427 (US); WANG, Shou-Lu G., Circle Duluth, GA 30097 (US); CHANDRASEKARAN, Neelakandan, Saint Paul, Minnesota 55133-3427 (US); NELSON, Todd L., Saint Paul, Minnesota 55133-3427 (US); RENDON, Stanley, Saint Paul, Minnesota 55133-3427 (US); PELTIER, Mark A., Saint Paul, Minnesota 55133-3427 (US); BERRIGAN, Michael R., Saint Paul, Minnesota 55133-3427 (US); HALL, Jerald W., Jr., Saint Paul, Minnesota 55133-3427 (US); SANOCKI, Stephen M., Saint Paul, Minnesota 55133-3427 (US); JOHNSON, Daniel E., Saint Paul, Minnesota 55133-3427 (US); ROLSTAD, Bernard G., Hugo, MN 55038 (US); GUNES, Ibrahim S., Saint Paul, Minnesota 55133-3427 (US); CHAKRAVARTY, Jayant, Saint Paul, Minnesota 55133-3427 (US)
(74) Representative: Vossius & Partner Patentanwälte Rechtsanwälte mbB
(86) International application number: PCT/US2016/046278
(87) International publication number: WO 2017/030856

(56) References cited:
- WO-A1-02/064360
- US-A1- 2003 124 310
- US-A1- 2007 249 253

## Description

### FIELD

The present disclosure relates to composite fabrics, particularly fabrics which include a component having a structured surface, e.g. stemweb. The present disclosure further provides methods by which such fabric can be made.

### BACKGROUND

Articles with one or more structured surfaces are useful in a variety of applications (e.g., abrasive discs, assembly of automobile parts, and disposable absorbent articles). The articles may be provided as films that exhibit, for example, increased surface area, mechanical fastening structures, or optical properties.

Mechanical fasteners, which are also called hook and loop fasteners, typically include a plurality of closely spaced upstanding projections with loop-engaging heads useful as hook members, and loop members typically include a plurality of woven, nonwoven, or knitted loops. Mechanical fasteners are useful for providing releasable attachment in numerous applications. For example, mechanical fasteners are widely used in wearable disposable absorbent articles to fasten such articles around the body of a person. In typical configurations, a hook strip or patch on a fastening tab attached to the rear waist portion of a diaper or incontinence garment, for example, can fasten to a landing zone of loop material on the front waist region, or the hook strip or patch can fasten to the backsheet (e.g., nonwoven backsheet) of the diaper or incontinence garment in the front waist region. Mechanical fasteners are also useful for disposable articles such as sanitary napkins. A sanitary napkin typically includes a back sheet that is intended to be placed adjacent to the wearer's undergarment. The back sheet may comprise hook fastener elements to securely attach the sanitary napkin to the undergarment, which mechanically engages with the hook fastener elements.

Structured surfaces can be joined to a fabric to provide a laminate with higher strength, softness, and/or function in comparison to the structured surface itself. For example, U.S. Pat. No. 5,260,015 (Kennedy) discloses providing a hook and loop fastener with a surface opposite the surface containing upstanding hooks that is suitable for adhering to other materials or that provides loops for a back-to-back hook and loop fastener. U.S. Pat. Nos. 6,582,642 (Buzzell et al.) and 7,897,078 (Petersen et al.) disclose laminates formed from stretched thermoplastic layers having upstanding male fastening elements. U.S. Pat. No. 7,373,698 (Erdman et al.) and U.S. 2013/0289514 (Cheng) disclose bonding a hook material to a tab material with a pattern of bonding sites. Mechanical fasteners have been reported to be joined to a second material using adhesives, extrusion lamination, thermal bonding, ultrasonic welding, and sewing. US 2003/0124310 A1 relates to elastic laminate materials. The elastic laminate materials are laminates of extensible nonwoven fibrous webs and thermoplastic elastic materials.

### SUMMARY

The present disclosure provides a nonwoven laminate and method in which the fibers of the nonwoven are bonded together at the same time a structured film is bonded to the nonwoven. The nonwoven and structured film share coincident bond sites. The method disclosed herein is a simplified process for making a laminate, eliminating at least a step of unwinding the nonwoven web to be laminated.

In one aspect, the present disclosure provides a composite fabric that includes a nonwoven fabric layer and a structured film discontinuously bonded to the nonwoven fabric layer. The nonwoven fabric layer has non-bonded areas. An overlapping area of the nonwoven fabric layer and the structured film layer has at least one set of coincident bond sites, and the nonwoven fabric does not have another bonding pattern in the overlapping area distinct from the at least one set of coincident bond sites.

In another aspect, the present disclosure provides an absorbent article including the composite fabric described herein.

In another aspect, the present disclosure provides the use of the composite fabric described herein as a wipe.

In another aspect, the present disclosure includes a method of forming a composite fabric. The method includes providing a fiber layer including a mat of at least partially unconsolidated fibers, positioning a structured film layer such that it overlaps with the fiber layer, and discontinuously bonding the mat into a discontinuously bonded nonwoven fabric layer while simultaneously bonding the structured film layer to the nonwoven fabric layer.

In another aspect, the present disclosure provides an apparatus for forming a composite fabric. The apparatus includes a conveyor, a fiber depositor disposed so as to form a mat of unconsolidated fibers onto the conveyor, a web path positioned to dispose a structured film such that at least a portion of the structured film layer overlaps with the mat, and a bonding apparatus positioned so as to form discontinuous bond sites that bond the mat into a discontinuously bonded nonwoven fabric and simultaneously bond the structured film layer to the nonwoven fabric layer.

Various aspects and advantages of exemplary embodiments of the present disclosure have been summarized. The above Summary is not intended to describe each illustrated embodiment or every implementation of the present disclosure. Further features and advantages are disclosed in the embodiments that follow. The Drawings and the Detailed Description that follow more particularly exemplify certain embodiments using the principles disclosed herein.

### BRIEF DESCRIPTION OF THE DRAWINGS

The disclosure may be more completely understood in consideration of the following detailed description of various embodiments of the disclosure in connection with the accompanying figures, in which:
**FIG. 1** is a plan view of an example of a composite fabric according to one embodiment of the present disclosure.
**FIG. 2** is a schematic view of an apparatus suitable for making the composite fabric according to **FIG. 1****.**
**FIG. 3** is a plan micrograph of an example of a composite fabric according to the embodiment of the Example 1.
**FIG. 4** is a plan micrograph of the fabric of **FIG. 3** at greater magnification and emphasizing the lateral edge of the attachment strip.
**FIG. 5** is a micrograph of a cross-section through the structured film of **FIG. 4**, taken at a shallow angle to the fabric's surface.
**FIG. 6** is a plan view of an example of a composite fabric according to another embodiment of the present disclosure, in which the structured film has openings therethrough
**FIG. 7** is a perspective view of one embodiment of an absorbent article according to the present disclosure.

While the above-identified drawings, which may not be drawn to scale, set forth various embodiments of the present disclosure, other embodiments are also contemplated, as noted in the Detailed Description. In all cases, this disclosure describes the presently disclosed invention by way of representation of exemplary embodiments and not by express limitations. It should be understood that numerous other modifications and embodiments can be devised by those skilled in the art, which fall within the scope and spirit of this disclosure.

### DETAILED DESCRIPTION

As used in this Specification, the recitation of numerical ranges by endpoints includes all numbers subsumed within that range (e.g. 1 to 5 includes 1, 1.5, 2, 2.75, 3, 3.8, 4, and 5, and the like).

Unless otherwise indicated, all numbers expressing quantities or ingredients, measurement of properties and so forth used in the Specification and embodiments are to be understood as being modified in all instances by the term "about." Accordingly, unless indicated to the contrary, the numerical parameters set forth in the foregoing specification and attached listing of embodiments can vary depending upon the desired properties sought to be obtained by those skilled in the art utilizing the teachings of the present disclosure. At the very least, and not as an attempt to limit the application of the doctrine of equivalents to the scope of the claimed embodiments, each numerical parameter should at least be construed in light of the number of reported significant digits and by applying ordinary rounding techniques.

For the following defined terms, these definitions shall be applied for the entire Specification, including the claims, unless a different definition is provided in the claims or elsewhere in the Specification based upon a specific reference to a modification of a term used in the following Glossary:

### Glossary

The words "a", "an", and "the" are used interchangeably with "at least one" to mean one or more of the elements being described.

The phrase "comprises at least one of' followed by a list refers to comprising any one of the items in the list and any combination of two or more items in the list. The phrase "at least one of' followed by a list refers to any one of the items in the list or any combination of two or more items in the list.

The term "nonwoven" refers to a material having a structure of individual fibers or threads that are interlaid but not in an identifiable manner such as in a knitted fabric.

The term "layer" refers to any material or combination of materials on or overlaying a substrate.

The term "acrylic" refers to compositions of matter which have an acrylic or methacrylic moiety.

Words of orientation such as "atop, "on," "covering," "uppermost," "overlaying," "underlying" and the like for describing the location of various layers, refer to the relative position of a layer with respect to a horizontally-disposed, upwardly-facing substrate. It is not intended that the substrate, layers or articles encompassing the substrate and layers, should have any particular orientation in space during or after manufacture.

The term "separated by" to describe the position of a layer with respect to another layer and the substrate, or two other layers, means that the described layer is between, but not necessarily contiguous with, the other layer(s) and/or substrate.

The term "(co)polymer" or "(co)polymeric" includes homopolymers and copolymers, as well as homopolymers or copolymers that may be formed in a miscible blend, *e.g.,* by coextrusion or by reaction, including, e.g., transesterification. The term "copolymer" includes random, block, graft, and star copolymers.

The term "structured film" refers to a film with other than a planar or smooth surface.

The term "in-line," as used herein, means that the steps are completed without the thermoplastic layer being rolled up on itself. The steps may be completed sequentially with or without additional steps in-between. For clarification, the thermoplastic layer may be supplied in rolled form and the finished laminate may be rolled up on itself.

The term "machine direction" (MD) as used herein denotes the direction of a running, continuous web. In a roll, for example, comprising a mat of fibers and a structured film layer, the machine direction corresponds to the longitudinal direction of the roll. Accordingly, the terms machine direction and longitudinal direction may be used herein interchangeably. The term "cross-direction" (CD) as used herein denotes the direction that is essentially perpendicular to the machine direction.

The term "discontinuous" refers to bonding that is not continuous in at least one direction. Bonding may appear continuous in one direction and still be discontinuous if it is not continuous in another direction.

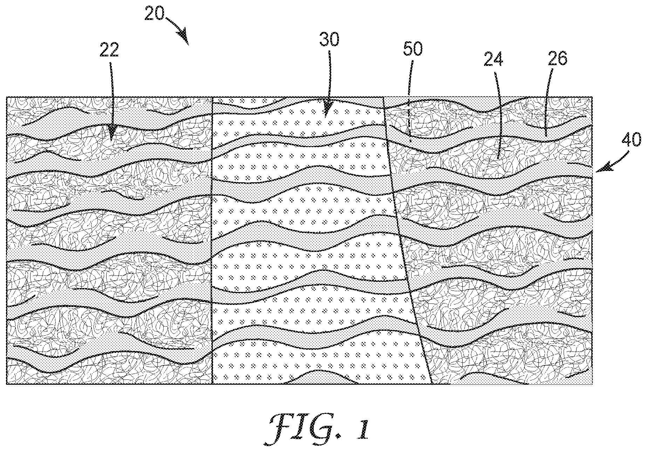

Referring now to **FIG. 1** a plan view of an exemplary composite fabric 20 according to one embodiment of the present disclosure is illustrated. Composite fabric 20 includes a nonwoven fabric layer 22. Nonwoven fabric layer 22 includes at least some areas 24 of at least partially unconsolidated (non-bonded) fibers, and some areas 26 of completely consolidated (bonded) fibers. Composite fabric 20 also includes a structured film layer in the form of a strip of structured film 30. In some convenient embodiments, a second strip of structured film may also be present. When more than one strip of structured film 30 is present, they need not be of the same material, nor have the same sort of surface structure. In this Figure it will be appreciated that the fibers of nonwoven fabric layer 22 are consolidated, and the structured film 30 is bonded to the nonwoven fabric layer 22, via a set of coincident bond sites 40. On the far side of fabric 20 in this view may be an optional auxiliary layer of nonwoven material 50. The set of bond sites in the illustrated embodiment generally extends continuously from the areas 26 of consolidated fibers to the structured film 30 and to areas of consolidated fibers on the opposite side of the structured film.

The composite fabric according to the present disclosure and/or made by the method of the present disclosure may have any desired size, and the individual layers may have any desired size relative to each other. In the embodiment illustrated in FIG. 1, the structured film layer is smaller in at least one dimension than the nonwoven fabric layer. In other embodiments, depending on the desired use of the composite fabric, the structured film layer may have the same width or same area as the nonwoven fabric layer or the structured film layer may be larger in at least one dimension than the nonwoven fabric layer. In the illustrated embodiment, the overlapping area of the structured film layer and the nonwoven fabric layer is the same as the area of the structured film layer since the entire area of the structured film layer overlays the nonwoven fabric layer. In some embodiments in which the structured film layer and the nonwoven fabric layer have the same area, the overlapping area is the same as the area of the entire composite fabric, and the perimeters of the structured film layer and nonwoven web layer are coincident. In other embodiments in which the structured film layer and the nonwoven fabric layer have the same area, the layers may be offset from each other. In embodiments in which the structured film layer is larger in at least one dimension than the nonwoven fabric layer, the overlapping area of the structured film layer and the nonwoven fabric layer may be the same as the area of the nonwoven web layer.

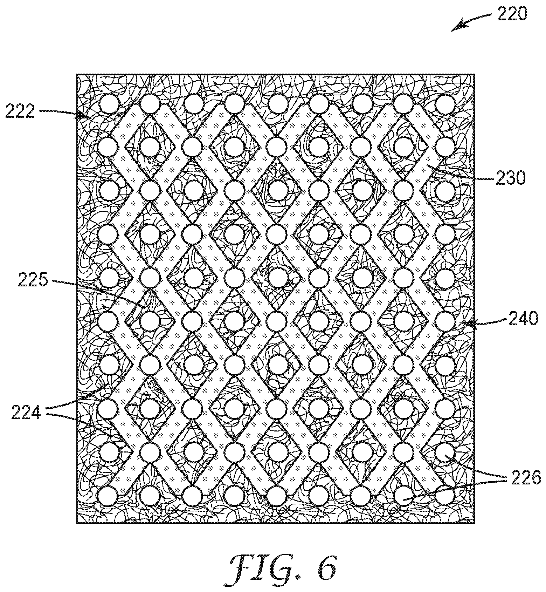

The overlapping area of the structured film layer and the nonwoven fabric layer in the composite fabric according to the present disclosure has at least one set of coincident bond sites. The embodiment illustrated in FIG. 1 has the set of coincident bond sites 40. The at least one set of coincident bond sites in the composite fabric according to the present disclosure and/or made by the method of the present disclosure can include a wide variety of geometric shapes, numbers, pictures, symbols, alphabetical letters, bar codes, or combinations thereof. The set of coincident bond sites can also include a company name, brand name, or logo that may be readily identified by a customer. The coincident bond sites can be point bonds as shown in FIG. 6, below, or continuous in a particular direction as shown in bond sites 40 in FIG. 1. The set of bond sites may be a regular pattern or may be asymmetric within the overlapping area. There may be more than one set of coincident bond sites in the overlapping area. For example, there may be a zone in the overlapping area having a particular size, shape, or density of bond sites and another zone in the overlapping area that differs in the size, shape, or density of the bond sites. In some embodiments, the density of the bond sites may be greater around the edges of the overlapping area than in the central portion of the overlapping area, or vice versa.

In the overlapping area, the intermittently bonded nonwoven fabric does not have another bonding pattern distinct from the at least one set of coincident bond sites. In other words, the nonwoven fabric layer is not already pattern-bonded before it is discontinuously bonded to the structured film. A distinct bonding pattern in the nonwoven fabric layer would be visually recognizable, either with the naked eye or under a microscope. A bonding pattern in the nonwoven fabric layer in the overlapping area that is not exactly registered with the coincident bond sites bonding the structured film to the nonwoven fabric layer but is otherwise the same in size, shape, in density would be considered a distinct bonding pattern and could be visually determined with a microscope. In some embodiments, all of the bond sites in the overlapping area are coincident bond sites.

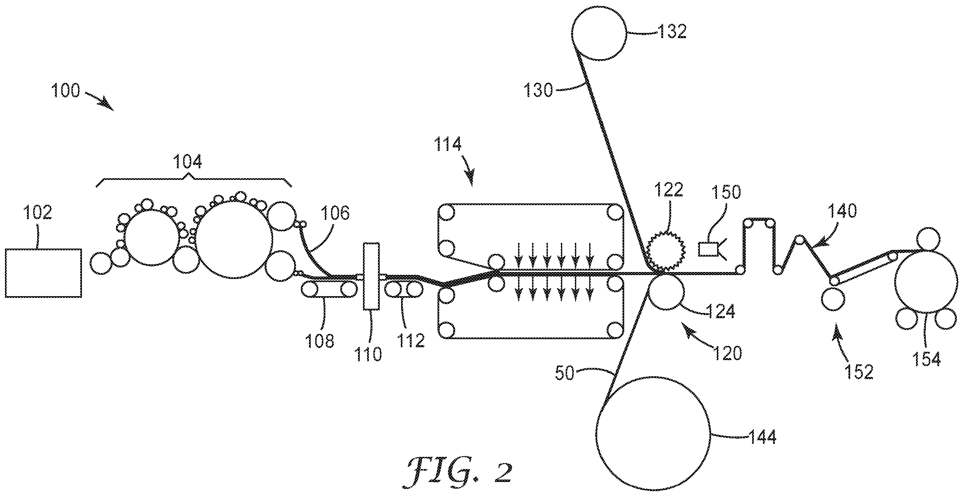

Referring now to **FIG. 2**, a schematic view of an apparatus 100 suitable for making the composite fabric according to **FIG. 1** is illustrated. In the illustrated embodiment, raw fiber is fed from fiber feed 102 into a carding machine 104 which separates and extends the fibers, laying them down in an unconsolidated mat 106, conveniently on conveyor 108. The artisan will perceive that there are other ways of laying down unconsolidated mats (e.g., by spinning fibers directly onto a conveyor). Any mechanism that performs this role is considered to be within the present disclosure. It may be convenient to gauge properties of the mat such as thickness, e.g. at gauge 110, to provide feedback to the mat forming process.

In the illustrated embodiment, the mat 106 is then conveyed by conveyor 112 to through-air bonder 114 which leaves mat 106 in a partially unconsolidated condition. This is considered an optional step in the present disclosure, but may sometimes be desirable to promote web uniformity. For example, a step of through-air bonding can promote a uniform basis weight along the length of the mat, without thin and thick spots. Using the through-air bonder, the mat is partially, randomly bonded before discontinuously bonding the mat and simultaneously bonding the structured film. In the illustrated embodiment, the mat is partially, randomly bonded in-line.

Mat 106 then approaches a bonding station 120, which includes a tool roll 122 and an anvil roll 124. Tool roll 122 can be, e.g., a heating thermal bonding tool, or an ultrasonic welding tool. At bonding station 120, a strip of structured film 130 supplied by unwind stand 132 is bonded to mat 106 forming composite fabric 140. At bonding station 120, least a portion of composite fabric 140 is not bonded to strip 130, leaving areas in their unconsolidated (or partially unconsolidated) state.

In some embodiments, it may be convenient to also bring an auxiliary layer of nonwoven material 50 adjacent to mat 106 just as it reaches bonding station 120 in order to, for example, give more strength to composite fabric 140. In the illustrated embodiment, nonwoven material 50 is provided via a web path from auxiliary unwind stand 144.

In some embodiments, it will be convenient to direct the composite fabric 140 adjacent to machine vision system 150 to provide timely determination of successful bonding. Thereafter, the composite fabric 140 can be steered by mechanism 152 onto winding station 154.

Using the embodiment of the apparatus 100 illustrated in FIG. 2, the strip of structured film 30 is bonded to the lofty side of the nonwoven fabric layer in the resulting composite fabric 140. Depending the desired construction of the composite fabric, other configurations of apparatus 100 may be useful. For example, the position of tool roll 122 and anvil roll 124 may be reversed, which would provide a composite fabric 140 having a lofty nonwoven fabric layer exposed on one face and the structured film exposed on the other face. In these embodiments as in others, auxiliary layer of nonwoven material 50 may or may not be present. In some embodiments, the unwind stand 144 and resulting nonwoven material 50 may be repositioned such that it is bonded between the strip of structured film 30 and mat 106. In these embodiments, the structured film may be positioned against the tool roll 122 or anvil roll 124.

In some embodiments of the composite fabric or method of making the composite fabric described above, the nonwoven fabric and/or mat 106 of at least partially unconsolidated fibers comprises at least one of spun fibers, carded fibers, or meltblown fibers. In some embodiments, the nonwoven fabric and/or mat 106 of at least partially unconsolidated fibers comprises at least one of spun fibers or carded fibers. The length of the fibers suitable for forming the mat and/or nonwoven fabric can vary depending on the method used for forming the web. In some embodiments, the nonwoven fabric and/or mat of at least partially unconsolidated fibers comprises fibers of effectively endless length. In some embodiments, the nonwoven fabric and/or mat of at least partially unconsolidated fibers comprises staple fibers, which may have a length, for example, up to 10 centimeters (cm), in some embodiments, in a range from 1cm to 8 cm, 0.5 cm to 5 cm, or 0.25 cm to 2.5 cm.

In some embodiments, the nonwoven fabric and/or mat of at least partially unconsolidated fibers comprises carded fibers. The carded mat can be made from separated staple fibers, which fibers are sent through a combing or carding unit that separates and aligns the staple fibers in the machine direction so as to form a generally machine direction-oriented fibrous nonwoven web. Randomizers can be useful for reducing this machine direction orientation.

Airlaying is another process by which the nonwoven fabric and/or mat 106 useful for practicing the present invention can be made. In the airlaying process, bundles of small fibers usually having lengths ranging between about 5 millimeters (mm) to about 10 cm are separated and entrained in an air supply and then deposited onto a forming screen, often with the assistance of a vacuum supply.

Spunlaid nonwoven fabric or mats 106 can be made, for example, by extruding a molten thermoplastic as filaments from a series of fine die orifices in a spinneret. The diameter of the extruded filaments is rapidly reduced under tension by, for example, non-eductive or eductive fluid-drawing or other known mechanisms, such as those described in U.S. Pat. Nos. 4,340,563, 3,692,618, 3,338,992, 3,341,394, 3,276,944, 3,502,538, 3,502,763, and 3,542,615. Nonwoven fabrics made in this manner that are subsequently bonded (e.g., point bonded or continuously bonded) are generally referred to as spunbond nonwovens.

Meltblown nonwoven fabric or mats 106 can be made, for example, by extrusion of thermoplastic polymers from multiple die orifices, which polymer melt streams are immediately attenuated by hot high velocity air or steam along two faces of the die immediately at the location where the polymer exits from the die orifices. The resulting fibers are entangled into a coherent web layer in the resulting turbulent airstream prior to collection on a collecting surface. While meltblown nonwovens have some integrity upon forming due to entanglement, generally, to provide sufficient integrity and strength, meltblown are typically further bonded (e.g., point bonded or continuously bonded).

Shaped or crimped fibers may also be useful. The fibers in the composite fabric or mat of fibers may have any desired cross-sectional shape (e.g., circular, prismatic, cylindrical, lobed, rectangular, polygonal, or dog-boned). The fibers may be hollow or not hollow, and they may be straight or have an undulating shape. Differences in cross-sectional shape allow for control of active surface area, mechanical properties, and interaction with fluid or other components.

In some embodiments, the nonwoven fabric and/or mat of at least partially unconsolidated fibers is corrugated. That is, the fibrous layer and/or mat of at least partially unconsolidated fibers can comprise arcuate portions projecting in the same direction from spaced anchor portions as described in U.S. Pat. No. 5,256,231 (Gorman et al.).

A variety of suitable materials may be useful for the fibers in the composite fabric or method of making the composite fabric according to the present disclosure. Examples of suitable materials for forming fibers include polyolefin homopolymers and copolymers; copolymers containing ethylene such as ethylene vinyl acetate and ethylene acrylic acid; polyesters such as poly(ethylene terephthalate), polyethylene butyrate and polyethylene napthalate; polyamides such as poly(hexamethylene adipamide); polyurethanes; polycarbonates; poly(vinyl alcohol); ketones such as polyetheretherketone; polyphenylene sulfide; viscose; and mixtures thereof. In some embodiments, fibers comprise polyolefins (e.g., polyethylene, polypropylene, polybutylene, ethylene copolymers, propylene copolymers, butylene copolymers, and copolymers and blends of these polymers), polyesters, polyamides, or a combination thereof. The fibers may also be multi-component fibers, for example, having a core of one thermoplastic material and a sheath of another thermoplastic material. The sheath may melt at a lower temperature than the core, providing partial, random bonding between the fibers when the mat of fibers is exposed to a temperature at which the sheath melts. A combination of mono-component fibers having different melting points may also be useful for this purpose. In some embodiments, the nonwoven fabric layer or mat 106 useful in the composite fabric or method according to the present disclosure is at least partially elastic. Examples of polymers for making elastic fibers include thermoplastic elastomers such as ABA block copolymers, polyurethane elastomers, polyolefin elastomers (e.g., metallocene polyolefin elastomers), olefin block copolymers, polyamide elastomers, ethylene vinyl acetate elastomers, and polyester elastomers. An ABA block copolymer elastomer generally is one where the A blocks are polystyrenic, and the B blocks are prepared from conjugated dienes (e.g., lower alkylene dienes). The A block is generally formed predominantly of substituted (e.g., alkylated) or unsubstituted styrenic moieties (e.g., polystyrene, poly(alphamethylstyrene), or poly(t-butylstyrene)), having an average molecular weight from about 4,000 to 50,000 grams per mole. The B block(s) is generally formed predominantly of conjugated dienes (e.g., isoprene, 1,3-butadiene, or ethylene-butylene monomers), which may be substituted or unsubstituted, and has an average molecular weight from about 5,000 to 500,000 grams per mole. The A and B blocks may be configured, for example, in linear, radial, or star configurations. An ABA block copolymer may contain multiple A and/or B blocks, which blocks may be made from the same or different monomers. A typical block copolymer is a linear ABA block copolymer, where the A blocks may be the same or different, or a block copolymer having more than three blocks, predominantly terminating with A blocks. Multi-block copolymers may contain, for example, a certain proportion of AB diblock copolymer, which tends to form a more tacky elastomeric film segment. Other elastic polymers can be blended with block copolymer elastomers, and various elastic polymers may be blended to have varying degrees of elastic properties. Many types of thermoplastic elastomers are commercially available, including those from BASF, Florham Park, N.J., under the trade designation "STYROFLEX", from Kraton Polymers, Houston, Tex., under the trade designation "KRATON", from Dow Chemical, Midland, Mich., under the trade designation "PELLETHANE", "INFUSE", VERSIFY", or "NORDEL", from DSM, Heerlen, Netherlands, under the trade designation "ARNITEL", from E. I. duPont de Nemours and Company, Wilmington, Del., under the trade designation "HYTREL", from ExxonMobil, Irving, Tex. under the trade designation "VISTAMAXX", and more.

In the method according to the present disclosure, before discontinuously bonding the mat to form the discontinuously bonded nonwoven fabric while simultaneously bonding the structured film to the nonwoven fabric, the fibers of the mat are at least partially unconsolidated. In some embodiments, a mat having fibers that are "at least partially unconsolidated" refers to a mat that is partially, randomly bonded. In some of these embodiments, the bond area of the mat is less than 20%, 10%, 5%, or 1%, based on the area of the mat. In some embodiments, a mat having fibers that are "at least partially unconsolidated" refers to a mat that is not pattern-bonded. The term "at least partially unconsolidated" includes fully unconsolidated fibers, in which there is no bonding between the fibers. In some embodiments, a mat having fibers that are "at least partially unconsolidated" refers to a mat having a tensile strength of less than 3 pounds per inch of width at a mat basis weight of about 30 grams per square meter. A person skilled in the art would understand that a mat of fibers that has been pressed between two smooth, heated calender rolls is fully consolidated and does not include unconsolidated fibers. Similarly, a person skilled in the art would understand that a mat of fibers that has been continuously extrusion laminated to a structured film does not include unconsolidated fibers and would not be considered discontinuously bonded. In the composite fabric according to the present disclosure, the nonwoven fabric layer that includes bonded areas also includes at least some unconsolidated fibers. That is, in at least some of the areas that are not located at the coincident bond sites, the fibers are not bonded together.

In some embodiments of composite fabric, the nonwoven fabric layer comprising at least some unconsolidated fibers is partially, randomly bonded in areas not located at the coincident bond sites. Similarly, in some embodiments of the method according to the present disclosure, the mat of at least partially unconsolidated fibers is partially, randomly bonded before discontinuously bonding the mat while simultaneously bonding the structured film. As described above in connection with FIG. 2, partially bonding the mat can improve its uniformity, particularly when the mat is partially bonded in-line. Partial bonding of the mat can improve the tensile properties of the mat and allow for easier handling. One bonding method is powder bonding wherein a powdered adhesive is distributed through the web and then activated, usually by heating the web and adhesive with hot air. A spray adhesive may also be applied. Through-air bonding may also be useful when no adhesive is applied when hot air can melt bond some of the fibers together. For example, including a relatively low-melting fiber or a bicomponent fiber with components of differing melting points in the mat of fibers may be useful.

The structured film useful for the composite fabric and method of making a composite fabric according to the present disclosure may be made from a variety of suitable materials. In some embodiments, the structured film is a thermoplastic film. Suitable thermoplastic materials include polyolefin homopolymers such as polyethylene and polypropylene, copolymers of ethylene, propylene and/or butylene; copolymers containing ethylene such as ethylene vinyl acetate and ethylene acrylic acid; polyesters such as poly(ethylene terephthalate), polyethylene butyrate and polyethylene napthalate; polyamides such as poly(hexamethylene adipamide); polyurethanes; polycarbonates; poly(vinyl alcohol); ketones such as polyetheretherketone; polyphenylene sulfide; and mixtures thereof. In some embodiments, the thermoplastic is a polyolefin (e.g., polyethylene, polypropylene, polybutylene, ethylene copolymers, propylene copolymers, butylene copolymers, and copolymers and blends of these materials). For any of the embodiments in which the thermoplastic backing includes polypropylene, the polypropylene may include alpha and/or beta phase polypropylene.

In some embodiments, the structured film can be made from a multilayer or multi-component melt stream of thermoplastic materials. This can result in surface structures formed at least partially from a different thermoplastic material than the one predominately forming the backing. Various configurations of upstanding posts made from a multilayer melt stream are shown in U. S. Pat. No. 6,106,922 (Cejka et al.), for example. A multilayer or multi-component melt stream can be formed by any conventional method. A multilayer melt stream can be formed by a multilayer feedblock, such as that shown in U.S. Pat. No. 4,839,131 (Cloeren). A multicomponent melt stream having domains or regions with different components could also be used. Useful multicomponent melt streams could be formed by use of inclusion co-extrusion die or other known methods (e.g., that shown in U.S. Pat. No. 6,767,492 (Norquist et al.).

Structured films useful for practicing the present disclosure may have a backing and surface structures that are integral (that is, generally formed at the same time as a unit, unitary). Surface structures on a backing can be made, for example, by feeding a thermoplastic material onto a continuously moving mold surface with cavities having the inverse shape of the surface structures. The thermoplastic material can be passed between a nip formed by two rolls or a nip between a die face and roll surface, with at least one of the rolls having the cavities. Pressure provided by the nip forces the resin into the cavities. In some embodiments, a vacuum can be used to evacuate the cavities for easier filling of the cavities. The nip has a large enough gap such that a coherent thermoplastic backing is formed over the cavities. In some embodiments, the thickness of the thermoplastic backing may be up to about 400 micrometers, 300 micrometers, or 250 micrometers and at least about 30 micrometers or 50 micrometers before stretching in the first direction, depending on the desired reticulated film. The mold surface and cavities can optionally be air or water cooled before stripping the integrally formed backing and surface structures from the mold surface such as by a stripper roll.

In some embodiments of the method and composite fabric according to the present disclosure, the structured film is a stemweb. A stemweb typically includes a plurality of upstanding posts on a backing, wherein "upstanding" refers to structures that protrude from a backing and includes structures (e.g., posts or stems) that stand perpendicular to the backing and structures (e.g., posts or stems) that are at an angle to the backing other than 90 degrees. In addition to stems or posts, other surface structures may be made according to any of the methods described above. Examples of useful surface structures include continuous ridges, pyramids (e.g., triangular pyramids or square pyramids), cones, hemispherical bumps, or cubes. The tool may contain cavities as described above, or the tool may include structures that protrude from the tool. Therefore, in the structured film, structures may be positive structures that protrude from the surface of the film or may be considered depressions in the surface of the film. Depressions in the surface of the film may be made with a variety of useful shapes.

Mold surfaces suitable for forming structured surfaces can be made, for example, by forming (e.g., by computer numerical control with drilling, photo etching, using galvanic printed sleeves, laser drilling, electron beam drilling, metal punching, direct machining, or lost wax processing) a series of cavities having the inverse shape of the surface structures into the cylindrical face of a metal mold or sleeve. Suitable tool rolls include such as those formed from a series of plates defining a plurality of cavities about its periphery including those described, for example, in U.S. Pat. No. 4,775,310 (Fischer). Cavities may be formed in the plates by drilling or photoresist technology, for example. Other suitable tool rolls may include wire-wrapped rolls, which are disclosed along with their method of manufacturing, for example, in U.S. Pat. No. 6,190,594 (Gorman et al.). Another example of a method for forming a thermoplastic backing with surface structures includes using a flexible mold belt defining an array of cavities as described in U.S. Pat. No. 7,214,334 (Jens et al.). Yet other useful methods for forming a thermoplastic backing with surface structures can be found in U.S. Pat. Nos. 6,287,665 (Hammer), 7,198,743 (Tuma), and 6,627,133 (Tuma).

In any of the mold surfaces mentioned above, the cavities and the resultant surface structures may have a variety of cross-sectional shapes. For example, the cross-sectional shape of the cavity and surface structure may be a polygon (e.g., square, rectangle, rhombus, hexagon, pentagon, or dodecagon), which may be a regular polygon or not, or the cross-sectional shape of the cavity and surface structure may be curved (e.g., round or elliptical). The surface structure may taper from its base to its distal tip, for example, for easier removal from the cavity, but this is not a requirement.

In some embodiments of the composite fabric and method disclosed herein in which the structured film is a stemweb, the stemweb is a mechanical fastener, and the surface structures are male fastening elements. With reference to the mold surfaces described above, in these embodiments, the cavity may have the inverse shape of a post having a loop-engaging head (e.g., a male fastening element) or may have the inverse shape of an upstanding post without loop-engaging heads that can be formed into loop-engaging heads, if desired. If upstanding posts formed upon exiting the cavities do not have loop-engaging heads, loop-engaging heads could be subsequently formed by a capping method as described in U.S. Pat. No. 5,077,870 (Melbye et al.). Typically, the capping method includes deforming the tip portions of the upstanding posts using heat and/or pressure. The heat and pressure, if both are used, could be applied sequentially or simultaneously. The formation of male fastening elements can also include a step in which the shape of the cap is changed, for example, as described in U.S. Pat. No. 6,132,660 (Kampfer).

For any of the embodiments described above in which the surface structures are upstanding posts with loop-engaging overhangs, the term "loop-engaging" relates to the ability of a male fastening element to be mechanically attached to a loop material. Generally, male fastening elements with loop-engaging heads have a head shape that is different from the shape of the post. For example, the male fastening element may be in the shape of a mushroom (e.g., with a circular or oval head enlarged with respect to the stem), a hook, a palm-tree, a nail, a T, or a J. In some embodiments, useful loop engaging overhangs extend in multiple (i.e., at least two) directions, in some embodiments, at least two orthogonal directions. For example, the upstanding post may be in the shape of a mushroom, a nail, a palm tree, or a T. In some embodiments, the upstanding posts are provided with a mushroom head (e.g., with an oval or round cap distal from the thermoplastic backing). The loop-engageability of male fastening elements may be determined and defined by using standard woven, nonwoven, or knit materials. A region of male fastening elements with loop-engaging heads generally will provide, in combination with a loop material, at least one of a higher peel strength, higher dynamic shear strength, or higher dynamic friction than a region of posts without loop-engaging heads. Male fastening elements that have "loop-engaging overhangs" or "loop-engaging heads" do not include ribs that are precursors to fastening elements (e.g., elongate ribs that are profile extruded and subsequently cut to form male fastening elements upon stretching in the direction of the ribs). Such ribs would not be able to engage loops before they are cut and stretched. Such ribs would also not be considered upstanding posts or discrete elements. Typically, male fastening elements that have loop-engaging heads have a maximum width dimension (in either dimension normal to the height) of up to about 1 (in some embodiments, 0.9, 0.8, 0.7, 0.6, 0.5, or 0.45) millimeter. In some embodiments, the male fastening elements have a maximum height (above the backing) of up to 3 mm, 1.5 mm, 1 mm, or 0.5 mm and, in some embodiments a minimum height of at least 0.03 mm, 0.05 mm, 0.1 mm, or 0.2 mm. In some embodiments, the upstanding posts have aspect ratio (that is, a ratio of height to width at the widest point) of at least about 0.25:1, 1:1, 2:1, 3:1, or 4:1.

In some embodiments, the surface structures are spaced apart on a backing. The term "spaced-apart" refers to surface structures that are formed to have a distance between them. The bases of "spaced-apart" surface structures, where they are attached to the backing, do not touch each other when the backing is in an unbent configuration. The backing in these embodiments may be considered to be an unstructured film region or as an aggregate of unstructured film regions. Spaced-apart surface structures may have an initial density (i.e., before any stretching of the film as described below) of at least 10 per square centimeter (cm²) (63 per square inch in²). For example, the initial density of the spaced-apart surface structures may be at least 100/cm² (635/in²), 248/cm² (1600/in²), 394/cm² (2500/in²), or 550/cm² (3500/in²). In some embodiments, the initial density of the spaced-apart surface structures may be up to 1575/cm² (10000/in²), up to about 1182/cm² (7500/in²), or up to about 787/cm² (5000/in²). Initial densities in a range from 10/cm² (63/in²) to 1575/cm² (10000/in²) or 100/cm² (635/in²) to 1182/cm² (7500/in²) may be useful, for example. The spacing of the spaced-apart surface structures need not be uniform.

The surface structures may be provided in a variety of patterns. For example, there may be groups of surface structures clustered together, with separation between the clusters. In these embodiments, the space between the clusters may be considered to be an unstructured film region.

In some embodiments, the surface structures are continuous in at least one direction of the film but may be spaced apart in another direction of the film. For example, the surface structures may be continuous ridges spaced apart on a film backing. The space between adjacent edges of the ridges may be at least 0.5 mm or at least 0.63 mm. The space between adjacent edges of the ridges may be up to 1 mm or 2 mm. The backing in these embodiments may be considered to be an unstructured film region or as an aggregate of unstructured film regions. A suitable method for a film with continuous ridges is profile extrusion, which is described, for example, in U.S. Pat. No. 4,894,060 (Nestegard). In this method a flow stream of a thermoplastic material is passed through a patterned die lip to form a web having downweb ridges. The ridges can optionally be transversely sliced at spaced locations along the extension of the ridges to form upstanding posts with a small separation caused by the cutting blade. The separation between the upstanding posts can optionally then be increased by stretching the film in the direction of the ridges using one of the stretching methods described below.

In some embodiments, the surface structures are generally not spaced apart. For example, the structured film may have a series of alternating, abutting upstanding and inverted pyramids in two directions of the film. In other example, the structure film may have a series of alternating, abutting ridges and grooves (that is, peaks and valleys) extending in one direction on the surface of the film. In some embodiments, the film may include one or more unstructured film region separating regions of abutting surface structures.

The structured films useful for practicing the present disclosure may include more than one kind of surface structure (e.g., any of the surface structures described above). For example, the structured film may have a combination of continuous ridges and upstanding posts or a combination of projections and indentations.

In some embodiments, the structured film useful in the composite fabric and method according to the present disclosure and/or the fibers in the mat or first layer of the pattern-bonded nonwoven comprise polypropylene. Semi-crystalline polyolefins can have more than one kind of crystal structure. For example, isotactic polypropylene is known to crystallize into at least three different forms: alpha (monoclinic), beta (pseudohexangonal), and gamma (triclinic) forms. In melt-crystallized material the predominant form is the alpha or monoclinic form. The beta form generally occurs at levels of only a few percent unless certain heterogeneous nuclei are present or the crystallization has occurred in a temperature gradient or in the presence of shearing forces. The heterogeneous nuclei are typically known as beta-nucleating agents, which act as foreign bodies in a crystallizable polymer melt. When the polymer cools below its crystallization temperature (e.g., a temperature in a range from 60 °C to 120 °C or 90 °C to 120 °C), the loose coiled polymer chains orient themselves around the beta-nucleating agent to form beta-phase regions. The beta form of polypropylene is a meta-stable form, which can be converted to the more stable alpha form by thermal treatment and/or applying stress. In some embodiments, the structured film comprises a beta-nucleating agent. Micropores can be formed in various amounts when the beta-form of polypropylene is stretched under certain conditions; see, e.g., Chu et al., "Microvoid formation process during the plastic deformation of β-form polypropylene", Polymer, Vol. 35, No. 16, pp. 3442-3448, 1994, and Chu et al., "Crystal transformation and micropore formation during uniaxial drawing of β-form polypropylene film", Polymer, Vol. 36, No. 13, pp. 2523-2530, 1995. Pore sizes achieved from this method can range from about 0.05 micrometer to about 1 micrometer, in some embodiments, about 0.1 micrometer to about 0.5 micrometer. In some embodiments, at least a portion of the structured film is microporous.

Generally, when the structure film comprises a beta-nucleating agent, the structured film comprises polypropylene. It should be understood that a structured film comprising polypropylene may comprise a polypropylene homopolymer or a copolymer containing propylene repeating units. The copolymer may be a copolymer of propylene and at least one other olefin (e.g., ethylene or an alpha-olefin having from 4 to 12 or 4 to 8 carbon atoms). Copolymers of ethylene, propylene and/or butylene may be useful. In some embodiments, the copolymer contains up to 90, 80, 70, 60, or 50 percent by weight of polypropylene. In some embodiments, the copolymer contains up to 50, 40, 30, 20, or 10 percent by weight of at least one of polyethylene or an alpha-olefin. The structured film may also comprise a blend of thermoplastic polymers that includes polypropylene. Suitable thermoplastic polymers include crystallizable polymers that are typically melt processable under conventional processing conditions. That is, on heating, they will typically soften and/or melt to permit processing in conventional equipment, such as an extruder, to form a sheet. Crystallizable polymers, upon cooling their melt under controlled conditions, spontaneously form geometrically regular and ordered chemical structures. Examples of suitable crystallizable thermoplastic polymers include addition polymers, such as polyolefins. Useful polyolefins include polymers of ethylene (e.g., high density polyethylene, low density polyethylene, or linear low density polyethylene), an alpha-olefin (e.g, 1-butene, 1-hexene, or 1-octene), styrene, and copolymers of two or more such olefins. The semi-crystalline polyolefin may comprise mixtures of stereo-isomers of such polymers, e.g., mixtures of isotactic polypropylene and atactic polypropylene or of isotactic polystyrene and atactic polystyrene. In some embodiments, the semi-crystalline polyolefin blend contains up to 90, 80, 70, 60, or 50 percent by weight of polypropylene. In some embodiments, the blend contains up to 50, 40, 30, 20, or 10 percent by weight of at least one of polyethylene or an alpha-olefin.

In embodiments of the composite fabric and method according to the present disclosure in which the structured film comprises a beta-nucleating agent, the beta-nucleating agent may be any inorganic or organic nucleating agent that can produce beta-spherulites in a melt-formed sheet comprising polyolefin. Useful beta-nucleating agents include gamma quinacridone, an aluminum salt of quinizarin sulphonic acid, dihydroquinoacridin-dione and quinacridin-tetrone, triphenenol ditriazine, calcium silicate, dicarboxylic acids (e.g., suberic, pimelic, ortho-phthalic, isophthalic, and terephthalic acid), sodium salts of these dicarboxylic acids, salts of these dicarboxylic acids and the metals of Group IIA of the periodic table (e.g., calcium, magnesium, or barium), delta-quinacridone, diamides of adipic or suberic acids, different types of indigosol and cibantine organic pigments, quiancridone quinone, N',N'-dicyclohexil-2,6-naphthalene dicarboxamide (available, for example, under the trade designation "NJ-Star NU-100" from New Japan Chemical Co. Ltd.), antraquinone red, and bis-azo yellow pigments. The properties of the extruded film are dependent on the selection of the beta nucleating agent and the concentration of the beta-nucleating agent. In some embodiments, the beta-nucleating agent is selected from the group consisting of gamma-quinacridone, a calcium salt of suberic acid, a calcium salt of pimelic acid and calcium and barium salts of polycarboxylic acids. In some embodiments, the beta-nucleating agent is quinacridone colorant Permanent Red E3B, which is also referred to as Q-dye. In some embodiments, the beta-nucleating agent is formed by mixing an organic dicarboxylic acid (e.g., pimelic acid, azelaic acid, o-phthalic acid, terephthalic acid, and isophthalic acid) and an oxide, hydroxide, or acid salt of a Group II metal (e.g., magnesium, calcium, strontium, and barium). So-called two component initiators include calcium carbonate combined with any of the organic dicarboxylic acids listed above and calcium stearate combined with pimelic acid. In some embodiments, the beta-nucleating agent is aromatic tri-carboxamide as described in U.S. Pat. No. 7,423,088 (Mäder et al.).

A convenient way of incorporating beta-nucleating agents into a semi-crystalline polyolefin useful for making a structured film disclosed herein is through the use of a concentrate. A concentrate is typically a highly loaded, pelletized polypropylene resin containing a higher concentration of nucleating agent than is desired in the final microporous film. The nucleating agent is present in the concentrate in a range of 0.01% to 2.0% by weight (100 to 20,000 ppm), in some embodiments in a range of 0.02% to 1% by weight (200 to 10,000 ppm). Typical concentrates are blended with non-nucleated polyolefin in the range of 0.5% to 50% (in some embodiments, in the range of 1% to 10%) by weight of the total polyolefin content of the microporous film. The concentration range of the beta-nucleating agent in the final microporous film may be 0.0001% to 1% by weight (1 ppm to 10,000 ppm), in some embodiments, 0.0002% to 0.1% by weight (2 ppm to 1000 ppm). A concentrate can also contain other additives such as stabilizers, pigments, and processing agents.

The level of beta-spherulites in the structured film can be determined, for example, using X-ray crystallography and Differential Scanning Calorimetry (DSC). By DSC, melting points and heats of fusion of both the alpha phase and the beta phase can be determined in a structured film useful for practicing the present disclosure. For semi-crystalline polypropylene, the melting point of the beta phase is lower than the melting point of the alpha phase (e.g., by about 10 to 15 degrees Celsius). The ratio of the heat of fusion of the beta phase to the total heat of fusion provides a percentage of the beta-spherulites in a sample. The level of beta-spherulites can be at least 10, 20, 25, 30, 40, or 50 percent, based on the total amount of alpha and beta phase crystals in the film. These levels of beta-spherulites may be found in the film before it is stretched.

In some embodiments of the method according to the present disclosure, the method comprises stretching the structured film in at least one direction before disposing the strip of structured film adjacent to the fiber layer. Stretching can be useful, for example, for decreasing the thickness of the structured film and providing thinner and more flexible composite fabric. Stretching the structured film can be carried out using a variety of methods. Stretching in the machine direction of a continuous web of indefinite length, can be performed by propelling the web over rolls of increasing speed, with the downweb roll speed faster than the upweb roll speed. Stretching in a cross-machine direction can be carried out on a continuous web using, for example, diverging rails, diverging disks, a series of bowed rollers, or a crown surface. A versatile stretching method that allows for monoaxial, sequential biaxial, and simultaneous biaxial stretching of the structured film employs a flat film tenter apparatus. Such an apparatus grasps the thermoplastic web using a plurality of clips, grippers, or other film edge-grasping means along opposing edges of the structured film in such a way that monoaxial, sequential biaxial, or simultaneous biaxial stretching in the desired direction is obtained by propelling the grasping means at varying speeds along divergent rails. Increasing clip speed in the machine direction generally results in machine-direction stretching. Stretching at angles to the machine direction and cross-direction are also possible with a flat film tenter appararus. Monoaxial and biaxial stretching can also be accomplished, for example, by the methods and apparatus disclosed in U.S. Pat. No. 7,897,078 (Petersen et al.) and the references cited therein. Flat film tenter stretching apparatuses are commercially available, for example, from Brückner Maschinenbau GmbH, Siegsdorf, Germany.

In some embodiments, the method according to the present disclosure further comprises heating the structured film. Heating may be useful, for example, before or during stretching. This may allow the structured film to be more flexible for stretching. Heating can be provided, for example, by IR irradiation, hot air treatment or by performing the stretching in a heat chamber. In some embodiments, heating is only applied to the second surface of the film (i.e., the surface opposite the first surface having multiple surface structures) to minimize any damage to the surface structures that may result from heating. In some embodiments in which the structured film comprises polypropylene, stretching is carried out in a temperature range from 50 °C to 130 °C, 50 °C to 110 °C, 80 °C to 110 °C, 85 °C to 100 °C, or 90 °C to 95 °C.

As described above, when the structured film includes a beta-nucleating agent, stretching the film provides micropores in at least a portion of the film. Without wanting to be bound by theory, it is believed that when the film is stretched in at least one direction, for example, the semi-crystalline polypropylene converts from the beta-crystalline structure to the alpha-crystalline structure in the film, and micropores are formed in the film. Surface structures are affected differently from the rest of the film. For example, spaced-apart structures (e.g., posts and ridges) on a backing are typically not affected by the stretching or are affected to a much lesser extent than the backing and therefore retain beta-crystalline structure and generally have lower levels of microporosity than the backing. The resulting stretched films can have several unique properties. For example, the micropores formed in the film along with stress-whitening can provide an opaque, white film with transparent surface structures. When micropores are formed in the backing of the stretched structured film disclosed herein, the density of the film decreases. The resulting low-density stretched structured film feels softer to the touch than films having comparable thicknesses but higher densities. The density of the film can be measured using conventional methods, for example, using helium in a pycnometer. The softness of the film can be measured, for example, using Gurley stiffness. In some embodiments, stretching a structured film including a beta-nucleating agent is carried out at temperature range from 50 °C to 110 °C, 50 °C to 90 °C, or 50 °C to 80 °C. In some embodiments, stretching at lower temperatures may be possible, for example, in a range from 25 °C to 50 °C. Structured polypropylene films containing a beta-nucleating agent can be stretched at a temperature of up to 70 °C (e.g., in a range from 50 °C to 70 °C or 60 °C to 70 °C) and still successfully achieve microporosity.

In any of the embodiments of the method or composite fabric according to the present disclosure in which the structured film is stretched, the thickness of the film is decreased upon stretching, and the density of spaced-apart surface structures after stretching is less than their initial density. In some embodiments, the surface structures have a density after stretching of at least 2 per square centimeter (cm²) (13 per square inch in²). For example, the density of the surface structures after stretching may be at least 62/cm² (400/in²), 124/cm² (800/in²), 248/cm² (1600/in²), or 394/cm² (2500/in²). In some embodiments, the density of the surface structures after stretching may be up to about 1182/cm² (7500/in²) or up to about 787/cm² (5000/in²). Densities after stretching in a range from 2/cm² (13/in²) to 1182/cm² (7500/in²) or 124/cm² (800/in²) to 787/cm² (5000/in²) may be useful, for example. Again, the spacing of the surface structures need not be uniform. The thickness of the backing after stretching the structured film may be, for example, in a range from 5 to 200 µm, 10 to 100 µm, or 30 to 70 µm. In some embodiments, useful draw ratios can be at least 1.25, 1.5, 2.0, 2.25, 2.5, 2.75, or 3, and draw ratios of up to 5, 7.5, or 10 may be useful, depending on material selection and the temperature of the thermoplastic backing when it is stretched. Stretch-induced molecular orientation in the structured film can be determined by standard spectrographic analysis of the birefringent properties of the film. Birefringence refers to a property of a material having different effective indexes of refraction in different directions. In the present application, birefringence is evaluated with a retardance imaging system available from Lot-Oriel GmbH & Co., Darmstadt, Germany, under the trade designation "LC-POLSCOPE" on a microscope available from Leica Microsystems GmbH, Wetzlar, Germany, under the trade designation "DMRXE" and a digital CCD color camera available from QImaging, Surrey, BC, Canada, under the trade designation "RETIGA EXi FAST 1394". The microscope is equipped with a 546.5 nm interference filter obtained from Cambridge Research & Instrumentation, Inc., Hopkinton, Mass., and 10x/0.25 objective.

Discontinuously bonding the mat to form the nonwoven fabric layer while simultaneously bonding the structured film to the nonwoven fabric in the method according to the present disclosure can be carried out by one or more of several bonding methods. For example, bonding can be carried out using at least one of heat, pressure, or ultrasonics. In some embodiments, bonding is carried out with heat and pressure between two calender rolls. One of the calender rolls may be smooth while the other has raised areas in the shape of the desired bonding pattern. In some embodiments, the bonding is carried out with an ultrasonic horn and a patterned anvil roll. The ultrasonic horn may be stationary or rotary. Ultrasonics may include vibration frequencies above, at, or below the audible range and would be chosen to efficiently bond the polymers taking into account the complex viscosity of the polymer being bonded. In some embodiments, the surface structures of the structured film are positioned toward the patterned anvil roll, and the mat is positioned toward the ultrasonic horn. This configuration may be useful, for example, for protecting unbonded surface structures from damage. Although in other embodiments, having the surface structures positioned away from patterned anvil roll and toward the ultrasonic horn can provide a composite fabric with a lofty nonwoven fabric layer on one surface and a structured film on the other surface. The depth of the anvil pattern is generally similar to the overall thickness of the structured film and the fiber mat but thin enough to keep the composite fabric as flat as possible after bonding.

The raised areas on the calender roll or anvil roll for forming the coincident bond sites may be in one or more regular patterns or may be asymmetric across the roll. For example, there may be a zone on the roll having a particular size, shape, or density of raised areas and another zone on the roll that differs in the size, shape, or density of the raised areas. The roll may be designed such that the portion of the roll that contacts the overlapping area of the nonwoven fabric layer and the structured film layer provides one pattern or more than one pattern of coincident bond sites. It is also envisioned that a portion of the roll that contacts the fiber layer comprising the mat of at least partially unconsolidated fibers only has a different pattern than the portion of the roll that contacts the overlapping area of the nonwoven fabric layer and the structured film layer.

The nonwoven fabric layer and/or the structured film layer may be formed, annealed, or treated to help facilitate the bonding process. The thermoplastic materials for the mat of fibers and structured film layer may be selected from the same or compatible materials. The nonwoven fabric layer or structured film layer may include nucleating agents, discontinuous phases of other polymers, or diluents to help facilitate the bonding process. Plasticizers or co-additives to the films, processing variables that leave the film not fully crystallized, or processing the nonwoven to reduce orientation of the polymer in the fibers or crystallite size or percentage in preparation for the bonding step may each also be useful for promoting bonding between the fiber layer and the structured film.

Typically, discontinuously bonding the mat to form the nonwoven fabric layer while simultaneously bonding the structured film layer to the nonwoven fabric layer (e.g., using at least one of heat, pressure, or ultrasonics as described above) destroys the surface structures in the bond sites. In embodiments in which the structured film layer is a stemweb (e.g., a mechanical fastener), the stemweb typically lacks stems (e.g., male fastening elements) in the bond sites.

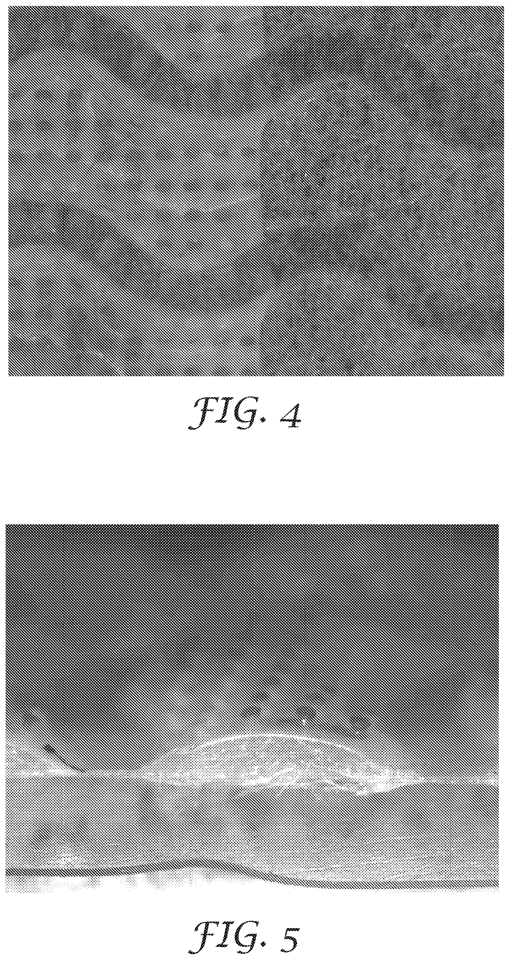

The discontinuous bonding of the mat to form the composite fabric can also provide, in some embodiments, a three-dimensional structure to the composite fabric which may be shown best in FIG. 5. The bond sites are flat while the non-bonded areas have a three-dimensional structure. Also shown in FIG. 5, the posts on the structured film layer are oriented in different directions in the non-bonded area. The differences in the orientation of the surface structures may provide benefits, for example, in loop attachment for a hook-and-loop fasteners.

Also, when the structured film includes microporosity that provides opacity in the film, discontinuously bonding the mat to form the nonwoven fabric layer while simultaneously bonding the structured film to the nonwoven fabric (e.g., using at least one of heat, pressure, or ultrasonics as described above) can collapse the microporous structure in the bond sites. The bond sites may be see-through regions of lower porosity that contrast with the surrounding opaque, microporous region. The term "see-through" refers to either transparent (that is, allowing passage of light and permitting a clear view of objects beyond) or translucent (that is, allowing passage of light and not permitting a clear view of objects beyond). The see-through region may be colored or colorless. It should be understood that a "see-through" region is large enough to be seen by the naked eye. The nonwoven fabric layer and/or the second fabric layer in some embodiments, may have a contrasting color from the structured film layer that may be visible in the bond sites once the microporous structure is collapsed. Contrasting colors in the structured film layer and the nonwoven fabric layer and/or the second fabric layer may be provided by including a dye or a pigment in at least one of the structured film layer, nonwoven fabric layer, or second fabric layer.

In selecting a set of bond sites for discontinuously bonding the mat while simultaneously bonding the structured film to the nonwoven fabric, the strength of the resulting nonwoven fabric, the strength of the bond of the structured film to the nonwoven fabric, the stiffness of the composite fabric, and the destruction of the structure in the structured film (e.g., stems in the stemweb) may all be considered and balanced against each other. For example, a set of bond sites with a high bond area may provide very good tensile strength for the nonwoven and ensure a strong bond between the nonwoven and the structured film but may crush too many structures in the structured film, which may affect the performance of the structured film, and may increase the stiffness of the composite fabric to a level that is undesirable. Conversely, a set of bond sites with a low bond area may minimize the effect on the structures of the structured film but may provide a nonwoven with a tensile strength unsuitable for its intended purpose.

A wider variety of patterns or arrangement of bond sites for discontinuously bonding the mat while simultaneously bonding the structured film to the nonwoven fabric may be available for structured films having a relatively thin backing, for example, in a range from 20 micrometers (µm) to 80 µm. In some embodiments, the thickness of the backing of the structured film is in a range from 30 µm to 75 µm, 40 µm to 75 µm, 20 µm to 70 µm, or 30 µm to 70 µm. When using structured films of this thickness, a stiffness increase that can occur when bonding the structured film to the nonwoven fabric is less that when thicker structured films are used.

Conveniently, the composite fabric according to the present disclosure and/or made by the method described herein does not require the use of an adhesive layer to bond the strip of structured film to the first layer of the composite fabric. Thus, in some embodiments, including any of the embodiments of the composite fabric described above or below, the composite fabric does not include an adhesive layer, which may be continuous or discontinuous, between the first layer and the strip of structured film. Similarly, in some embodiments, including any of the embodiments of the method according to the present disclosure described above or below, the method does not include disposing a layer of adhesive, which may be continuous or discontinuous, between the fiber layer and the structured film.

In some embodiments, at least two strips of structured film are disposed adjacent to fabric layer and bonded to the nonwoven fabric. The two strips may have the same or different size and shape and may be bonded to the nonwoven fabric in any desired configuration relative to each other. In some embodiments, two or more (e.g., three or four) strips of structured film are bonded side-by-side to the nonwoven fabric. The two or more strips of structured film may be abutting, or they may be separated by a distance that is usually smaller than the width of each strip (that is, in the direction perpendicular to the longest dimension of the strip of structured film and to the thickness dimension, which is the smallest dimension of the strip of structured film). An example of a suitable configuration of two fastening patches that may be useful for two strips of structured film is described in Int. Pat. Appl. Pub. No. WO 2011/163020 (Hauschildt et al.). The two or more strips of structured film may be the same or different sizes in any of the length, width, or thickness dimension.

For any of the embodiments of the composite fabric according to the present disclosure or the method of making the composite fabric according to the present disclosure, the structured film may include openings. The openings in the structured film may be in the form of a repeating pattern of geometric shapes such as circles, ovals, or polygons. The polygons may be, for example, hexagons or quadrilaterals such as parallelograms or diamonds. The openings may be formed in the structured film by any suitable method, including die punching. In some embodiments wherein the structured film includes openings (e.g., diamond- or hexagonal-shaped openings), the first layer including the nonwoven fabric does not include openings.

A composite fabric according to the present disclosure in which the structured film includes openings 225 is shown in FIG. 6. Composite fabric 220 includes a nonwoven fabric layer 222 that includes at least some areas 224 of at least partially unconsolidated (non-bonded) fibers, and some areas 226 of completely consolidated (bonded) fibers. Composite fabric 220 also includes structured film 230. The fibers of nonwoven fabric layer 222 are consolidated into the composite fabric 220, and the structured film 230 is bonded to the nonwoven fabric layer 222, via a set of coincident bond sites 240. The set of bond sites in the illustrated embodiment is a dot pattern extending from the areas 226 of consolidated fibers to the structured film 230, into openings 225 in the structured film, and to areas of consolidated fibers on the opposite side of the structured film. Although the openings 225 in the illustrated embodiment are diamond-shaped, any useful shape of openings may be selected (e.g., circles, ovals, or polygons). Although a discontinuous bonding pattern is shown in the illustrated embodiment, a bonding pattern generally continuous in one direction as shown in FIG. 1 or any other desirable bonding pattern may be useful to bond the structured film 230 with openings 225 to the first layer 222. For visual simplicity, the bond sites 240 are illustrated as registered with the centers and corners of the openings 225, but this is not necessary. Generally, the bond sites 240 need not and would not be registered with any pattern of openings 225 in the structured film 230.

In some embodiments, the openings may be formed by slitting the thermoplastic backing of a structured film to form multiple strands attached to each other at intact bridging regions in the backing and separating at least some of the multiple strands between at least some of the bridging regions. The bridging regions are regions where the backing is not cut through, and at least a portion of the bridging regions can be considered collinear with the slits. The intact bridging regions of the backing serve to divide the slits into a series of spaced-apart slit portions aligned in the direction of slitting (e.g., the machine direction), which can be referred to as interrupted slits. In some embodiments, for at least some adjacent interrupted slits, the spaced-apart slit portions are staggered in a direction transverse to the slitting direction (e.g., the cross-machine direction). The interrupted slits may be cut into the backing between some pairs of adjacent rows of stems although this is not a requirement. In some embodiments, curved lines may be used, which can result in crescent shaped openings after spreading. There may be more than one repeating pattern of geometric shaped openings. The openings may be evenly spaced or unevenly spaced as desired. For openings that are evenly spaced, the spacing between the openings may differ by up to 10, 5, 2.5, or 1 percent. Further details about providing openings in a structured film useful as a mechanical fastener can be found in U.S. Appl. Pub. No. 2012/0204383 (Wood et al.). In some embodiments, the structured film can comprise multiple strands attached to each other at intact bridging regions in the backing without spreading the strands apart to create openings. The interrupted slits may be made in either the longitudinal direction of the absorbent article or in a transverse direction. Further details about providing interrupted slits in a structured film useful as a mechanical fastener can be found in U.S. Appl. Pub. No. 2011/0313389 (Wood et al.). Such openings or slits in the structured film may be useful, for example, for improving the flexibility and/or decreasing the stiffness of the composite fabric.

Conveniently, the one or more strips of structured film can be supplied from an unwind stand. In these embodiments, the method according to the present disclosure includes unwinding the structured film from a roll before disposing the structured film layer adjacent to the fiber layer.

In some embodiments of the composite fabric according to the present disclosure, the composite fabric includes a second fabric layer adjacent the nonwoven fabric layer. In some embodiments, the second fabric layer is on a surface of the nonwoven fabric layer opposite to the surface bonded attached to the structured film. In some embodiments, the second fabric layer is positioned between the nonwoven fabric layer and the structured film. Similarly, in the method according to the present disclosure, the method can include disposing a second fabric layer adjacent to the mat and pattern-bonding the mat into a pattern-bonded nonwoven fabric while simultaneously bonding the structured film and the second fabric layer to the nonwoven fabric. The second fabric layer may be continuous (i.e., without any through-penetrating holes) or discontinuous (e.g. comprising through-penetrating perforations or pores). The second fabric layer may comprise a variety of suitable materials including woven webs, nonwoven webs, textiles, plastic films (e.g., single- or multilayered films, coextruded films, laterally laminated films, or films comprising foam layers), and combinations thereof. Examples of nonwoven webs that may be useful for the second fabric layer include spunbond webs, spunlaced webs, airlaid webs, meltblown web, and bonded carded webs. In some embodiments, the second fabric layer is a fibrous material (e.g., a woven, nonwoven, or knit material). Useful fibrous materials may be made of any of the fibers described above. In some embodiments, the second fabric layer comprises multiple layers of nonwoven materials with, for example, at least one layer of a meltblown nonwoven and at least one layer of a spunbonded nonwoven, or any other suitable combination of nonwoven materials. For example, the second fabric layer may be a spunbond-meltbond-spunbond, spunbond-spunbond, or spunbond-spunbond-spunbond multilayer material. Or, the second fabric layer may be a composite web comprising a nonwoven layer and a dense film layer. A variety of combinations of film and nonwoven layers may be useful. Useful second fabric layers may have any suitable basis weight or thickness that is desired for a particular application. For a fibrous carrier, the basis weight may range, e.g., from at least about 5, 8, 10, 20, 30, or 40 grams per square meter, up to about 400, 200, or 100 grams per square meter. The second fabric layer may be up to about 5 mm, about 2 mm, or about 1 mm in thickness and/or at least about 0.1, about 0.2, or about 0.5 mm in thickness.

In some embodiments, at least the portion of the second fabric layer is not extensible. In some embodiments, the portion of carrier joined to the reticulated film will have up to a 10 (in some embodiments, up to 9, 8, 7, 6, or 5) percent elongation in the CD. In some embodiments, the second fabric layer is not pleated. In other embodiments, one or more zones of the second fabric layer may comprise one or more elastically extensible materials extending in at least one direction when a force is applied and returning to approximately their original dimension after the force is removed. In some embodiments, the second fabric layer may be extensible but non-elastic. In other words, the second fabric layer may have an elongation of at least 5, 10, 15, 20, 25, 30, 40, or 50 percent but substantially no recovery from the elongation (e.g., up to 40, 25, 20, 10, or 5 percent recovery). The term "extensible" refers to a material that can be extended or elongated in the direction of an applied stretching force without destroying the structure of the material or material fibers. In some embodiments, an extensible material may be stretched to a length that is at least about 5, 10, 15, 20, 25, or 50 percent greater than its relaxed length without destroying the structure of the material or material fibers.

In some embodiments of the composite fabric and method of the present disclosure, the second fabric layer of the composite fabric comprises surface loops. The loops may be part of a fibrous structure formed by any of several methods such as weaving, knitting, warp knitting, weft insertion knitting, circular knitting, or methods for making nonwoven structures. In some embodiments, the loops are included in a nonwoven web or a knitted web. Examples of loop tapes that may suitable as second fabric layers for the composite fabric are disclosed, for example, in U. S. Pat. Nos. 5,389,416 (Mody et al.) and 5,256, 231 (Gorman et al.) and EP 0,341,993 (Gorman et al.). As described in U.S. Pat. No. 5,256,231 (Gorman et al.), the fibrous layer in a loop material can comprise arcuate portions projecting in the same direction from spaced anchor portions on a film. In these embodiments, generally the second fabric layer is adjacent the nonwoven fabric layer on a surface opposite to the structured film layer.

In some embodiments of the composite fabric according to the present disclosure, the composite fabric includes a film layer adjacent the nonwoven fabric layer. The film layer is generally positioned between the nonwoven fabric layer and the structured film. Similarly, in the method according to the present disclosure, the method can include disposing a film layer adjacent to the mat and pattern-bonding the mat into a pattern-bonded nonwoven fabric while simultaneously bonding the structured film and the film layer to the nonwoven fabric. The film layer may be continuous (i.e., without any through-penetrating holes) or discontinuous (e.g. comprising through-penetrating perforations or pores). The film layer may comprise a variety of suitable materials including any of the thermoplastics described above for the structured film layer.

In some embodiments, a film layer is extruded between a corrugated nonwoven layer and the structured film layer. The corrugated nonwoven may be partially, randomly bonded by through-air bonding as described above. Referring again to FIG. 2, in these embodiments, the structured film layer can be brought into the nip between the tool roll 122 and the anvil roll 124 with stems facing the anvil roll. A film is extruded between the structured film layer and the corrugated nonwoven to assist in bonding. At the same time the corrugated nonwoven is pattern bonded to the extrudate and structured film layer. The resulting composition fabric has the structured film on one side and a nonwoven with projecting arcuate portions on the opposite side.

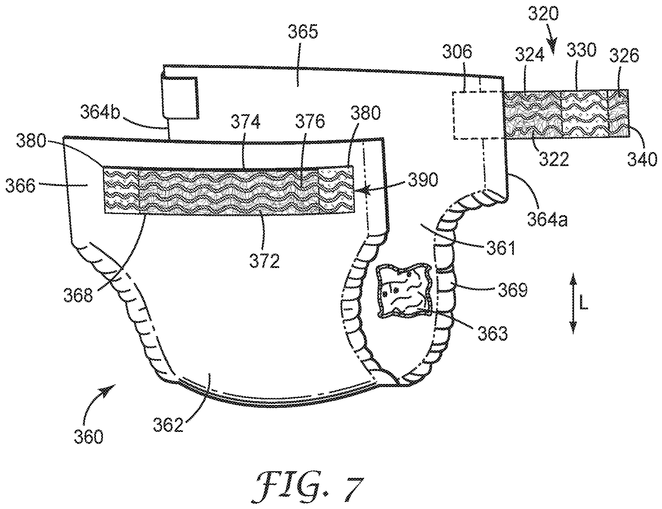

Composite fabrics according to the present disclosure and/or made according the method of the present disclosure are useful, for example, in absorbent articles. Absorbent articles according to the present disclosure include diapers and adult incontinence articles, for example. A schematic, perspective view of one embodiment of an absorbent article 300 according to the present disclosure is shown in FIG. 7. Absorbent article 300 includes a chassis with a topsheet side 361 and a backsheet side 362. The chassis also has first and second opposing longitudinal edges 364a and 364b extending from a rear waist region 365 to an opposing front waist region 366. The longitudinal direction of the absorbent article 360 refers to the direction "L" extending between the rear waist region 365 and the front waist region 366. Therefore, the term "longitudinal" refers to the length of the absorbent article 360, for example, when it is in an open configuration.

At least one of the front waist region 366 or the rear waist region 365, more typically the rear waist region 365, comprises at least one fastening tab. The fastening tab in the embodiment illustrated in FIG. 7 comprises a composite fabric 320 according to the present disclosure. Composite fabric 320 includes a nonwoven fabric layer 322 that includes at least some areas 324 of at least partially unconsolidated (non-bonded) fibers, and some areas 326 of completely consolidated fibers. Composite fabric 320 also includes a strip of structured film 330, useful as a mechanical fastener. The fibers of nonwoven fabric layer 322 are consolidated into the composite fabric 320, and the structured film 330 is bonded to the nonwoven fabric layer 322, via a set of coincident bond sites 340. An end 306 of the composite fabric 320 is bonded to the first longitudinal edge 364a of the chassis in the rear waist region 365 using adhesive (not shown). The fastening tab may also include a second layer (not shown) bonded to the nonwoven fabric layer 322 on a face opposite the structured film 330. In the illustrated embodiment, the nonwoven fabric layer and optionally second fabric layer at the user's end of the fastening tab exceed the extension of the structured film 330 thereby providing a fingerlift.

In the illustrated embodiment, a composite fabric according to the present disclosure positioned on the backsheet 362 of the front waist region 366 provides a target area 368 for the structured film 330. In the illustrated embodiment, the nonwoven fabric layer 372 of the composite fabric providing the target area 368 includes at least some areas 374 of at least partially unconsolidated (non-bonded) fibers, and some areas 376 of completely consolidated fibers. The composite fabric providing the target area 368 further includes two strips of structured film 380, one positioned closer to first longitudinal edge 364a and one positioned closer to second longitudinal edge 364b. The fibers of nonwoven fabric layer 372 are consolidated, and the strips of structured film 380 are bonded to the nonwoven fabric layer 372, via a set of coincident bond sites 390. In the illustrated embodiment, the set of bond sites 390 has the same pattern as the set of bond sites 340 shown in composite fabric 320, although this is not a requirement. In some embodiments (not shown), target area 368 need not be a composite fabric according to the present disclosure, but may be a nonwoven fabric layer having the same pattern of bond sites as the composite fabric 320 of the fastening tab, for example. In other embodiments, the size of the target area 368 may be smaller, may be in the form of two separate portions near the first and second longitudinal edges 364a, 364b, may be a loop tape as described above, or the mechanical fastener on the composite fabric 320 may engage with the backsheet, eliminating the need for the target area 368.

While in the illustrated embodiment, the composite fabric is included in a fastening tab, in other embodiments, the composite fabric may be an integral ear portion of the absorbent article. The composite fabric according to the present disclosure and/or made by the methods disclosed herein may also be useful, for example, for disposable articles such as sanitary napkins. Composite fabrics according to the present disclosure and/or made by a method of the present disclosure may also be useful in many other fastening applications, for example, assembly of automotive parts or any other application in which releasable attachment may be desirable.

Composite fabrics according to the present disclosure and/or made by a method of the present disclosure may also be useful, for example, as cleaning or abrasive wipes (e.g., scrubby wipes, tack cloths, or low cost abrasive wipes.) In cleaning wipes (e.g., scrubby wipes) it may be useful for the structured film to include openings 225 as shown in FIG. 6 or slits so that any water or cleaning solution may pass through the openings 225 into the first layer 222 in the form of a nonwoven web. The openings may have any desired shape or size. In these applications, a second fabric layer adjacent the first layer on a surface opposite to the structured film may be a cellulose sponge. The first layer may also be attached to a polyurethane foam on a surface opposite to the structured film. For a wipe application, it may be useful for at least a portion of the fibers in the fiber layer or nonwoven fabric layer to be hydrophilic. For example, at least a portion of the fibers in the fiber layer or nonwoven fabric layer may be polyester or viscose fibers. The nonwoven fabric layer may be loaded with a cleaning agent (e.g., surfactant or detergent) or an additive (e.g., waxes, oils, or adhesives) to help pick up fine particulate matter.

Examples of the present disclosure have been described above and are further illustrated below by way of the following Examples, which are not to be construed in any way as imposing limitations upon the scope of the present disclosure. On the contrary, it is to be clearly understood that resort may be had to various other examples, modifications, and equivalents thereof which, after reading the description herein, may suggest themselves to those skilled in the art without departing from the scope of the appended claims.

### EXAMPLES

The following examples are intended to illustrate exemplary embodiments within the scope of this disclosure. Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in their respective testing measurements. At the very least, and not as an attempt to limit the application of the doctrine of equivalents to the scope of the claims, each numerical parameter should at least be construed in light of the number of reported significant digits and by applying ordinary rounding techniques.

### Example 1

An apparatus was assembled generally as described in connection with **FIG. 1**. Example 1 was made with 4 denier polypropylene staple fibers obtained from FiberVisions, Covington, GA, under the trade designation "T-196". These fibers were fed into a fiber opener and "Roller-Doffed Card" carding machine obtained from Hergeth, Anchen, Germany, forming an unconsolidated mat with a basis weight of 24 g/m².

An auxiliary nonwoven fabric formed from polypropylene fibers obtained from Fitesa, Simpsonville, SC, under the trade designation "FPN 570D" was mounted on an auxiliary unwind stand. The auxiliary nonwoven fabric is made from carded hydrophobic propropylene fibers, has high elongation, and has a basis weight of 23 g/m².

A 13-mm wide strip of structured film in the form of stemweb, obtained from 3M Company, St. Paul, Minn. under the trade designation "CHK-05810" was mounted on an unwind stand. The strip, the carded web, and the auxiliary nonwoven fabric were brought together at a bonding station and conveyed between a thermal embossing roll operated at a temperature of 287 °F (142 °C) and a smooth roll operated at a temperature of 297 °F (147 °C). The gap was controlled by applying a fixed pressure of 250 pound force/linear inch (438 N/linear cm). The line speed was set to 32 feet/ minute (9.75 m/min), and the thermal embossing roll was provided with raised areas in a wavy pattern sufficient to form 30% bonded areas joining the three layers.

### Example 2

Example 2 was made as described for Example 1 with the modification that the 13-mm wide strip of structured film in the form of stemweb was generally as formed by Example 3 of U.S. Pat. Appl. Pub. No. 2013/0149488 with the modifications that the resin polypropylene "5571" impact copolymer from Total Petrochemicals, Port Arthur, Tex., which is reported to have a density of 0.905 g/cc as measured by ASTM D-1505 and a melt flow index of 7 grams per 10 minutes as measured by ASTM 1238. Instead of a post density of 5200 pins per square inch (806 pins per square cm) the stemweb had a post density was 3500 pins per square inch (542 pins per square cm). Instead of using a draw ratio of 2:1, the sample was stretched at 70 °C using a draw ratio of 3:1.

### Example 3

Example 3 was made as described for Example 1 with the following modifications. A mixture of 75% fibers obtained from FiberVisions under the trade designation "T-196" and 25% 3 denier bicomponent fibers having a polypropylene core and a polyethylene sheath obtained from ES FiberVisions under the trade designation "ESC233CL1" was used instead of 100% "T-196" fibers. The resulting mat formed in the carding machine had a basis weight of 30 g/m². The mat was supported on a belt into a nip and passed through a standard through-air oven with temperature set at 295 °F (146 °C) at a belt speed of 32 feet/minute (9.75 m/min). The resultant web was a self―supporting web that was removed from the belt and wound into a roll and mounted on an unwind stand.

The structured film, the through-air bonded mat, and the auxiliary nonwoven fabric obtained from Fitesa were brought together at a bonding station as described in Example 1.

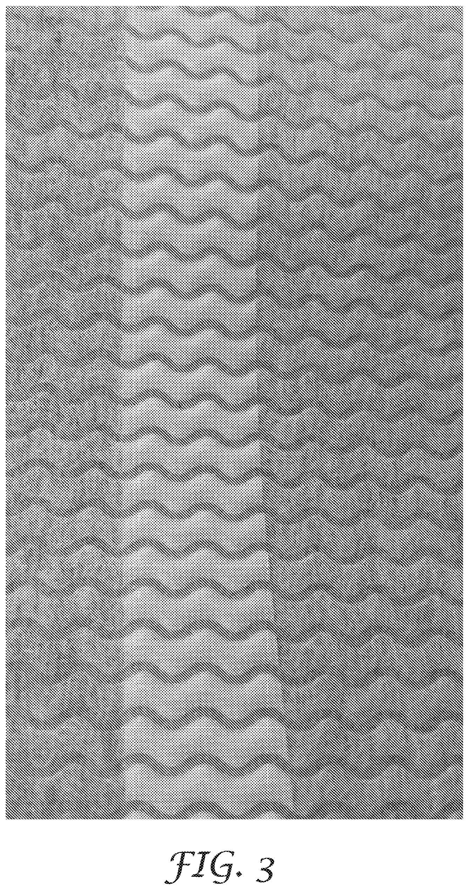

A plan micrograph of the resulting fabric is presented in FIG. 3. FIG. 4 is a plan micrograph of the fabric of FIG. 3 at greater magnification and shows the edge of the structured film. FIG. 5 is a micrograph of a cross-section through the structured film depicted in FIG. 4, taken at a shallow angle to the fabric's surface so that the loops provided by the partially unconsolidated fibers can be readily appreciated.

### Example 4

Example 4 was made as described for Example 3 with the modification that the 13-mm wide strip of structured film in the form of stemweb was generally as formed by Example 3 of U.S. Pat. Appl. Pub. No. 2013/0149488 with the modifications that the resin polypropylene "5571" impact copolymer from Total Petrochemicals, Port Arthur, Tex., which is reported to have a density of 0.905 g/cc as measured by ASTM D-1505 and a melt flow index of 7 grams per 10 minutes as measured by ASTM 1238. Instead of a post density of 5200 pins per square inch (806 pins per square cm) the stemweb had a post density was 3500 pins per square inch (542 pins per square cm). Instead of using a draw ratio of 2:1, the sample was stretched at 70 °C using a draw ratio of 3:1.

### Example 5

Example 5 was made as described for Example 1 with the following modifications. A mixture of 60% fibers obtained from FiberVisions under the trade designation "T-196" (having an approximate fiber cut length of 48 mm), 25% 4.4 denier bicomponent fibers having a polypropylene core and a polyethylene sheath with an approximate cut length of 38 mm obtained from FiberVisions under the trade designation "ESC240CM5", and 15% 1.7 denier viscose fibers with an approximate cut length of 39 mm obtained from Lenzing Fibers, Inc., New York, NY, under the trade designation "LENZING VISCOSE" was used instead of 100% "T-196" fibers. The carding machine equipped with the heated calendering two-roll stack was operated at an approximate line speed of 5.2 m/min. The structured film was the same as that obtained from 3M Company, under the trade designation "CHK-05810" except that it was 14 mm wide and was perforated with circular holes having a diameter of approximately 1.5 mm. The approximate ratio of the perforated surface area to the total film surface area was 20%. The perforation was carried out using a rotary die cutting process at IPS Perforating, Inc., Statesville, NC. The nip pressure in the calendaring roll was set to 52.5 kN/m. The temperature of the upper roll in the two-roll stack was set to 157 °C and that of the bottom roll was set to 146 °C. The bonding strength between the nonwoven fabric layer and the structured film layer in the resulting composite fabric was found to be strong by holding a corner of the structured film layer by hand and by trying to peel it from the nonwoven fabric layer.

While the specification has described in detail certain exemplary embodiments, it will be appreciated that those skilled in the art, upon attaining an understanding of the foregoing, may readily conceive of alterations to, variations of, and equivalents to these embodiments. Accordingly, it should be understood that this disclosure is not to be unduly limited to the illustrative embodiments set forth hereinabove.

## Claims

1. A composite fabric (20, 220, 320) comprising:
a nonwoven fabric layer (22, 222, 322), and
a structured film layer (30, 230, 330) discontinuously bonded to the nonwoven fabric layer (22, 222, 322),
wherein the structured film layer (30, 230, 330) comprises upstanding posts, wherein fibers of the nonwoven fabric layer (22, 222, 322) are bonded together, and the structured film layer (30, 230, 330) is bonded to the nonwoven fabric layer (22, 222, 322) via at least one set of coincident bond sites (40, 240, 340) in an overlapping area of the nonwoven fabric layer (22, 222, 322) and the structured film layer (30, 230, 330), and
wherein the nonwoven fabric layer (22, 222, 322) comprises non-bonded areas but does not have another bonding pattern in the overlapping area distinct from the at least one set of coincident bond sites (40, 240, 340).

2. The composite fabric (20, 220, 320) of claim 1, wherein in the coincident bond sites (40, 240, 340), the structured film layer lacks the upstanding posts.

3. The composite fabric (20, 220, 320) of claim 1 or 2, wherein the structured film layer (30, 230, 330) comprises a beta-nucleating agent.

4. The composite fabric (20, 220, 320) of any one of claims 1 to 3, wherein the nonwoven fabric layer (22, 222, 322) comprises at least one of spun fibers, carded fibers, or meltblown fibers.

5. The composite fabric (20, 220, 320) of any one of claims 1 to 4, further comprising at least one of a second fabric layer adjacent the nonwoven fabric layer (22, 222, 322) or a film layer between the nonwoven fabric layer (22, 222, 322) and the structured film layer (30, 230, 330).

6. The composite fabric (20, 220, 320) of claim 5, wherein the second fabric layer comprises surface loops.

7. The composite fabric (220) of any one of claims 1 to 4, wherein the structured film layer (230) is provided with at least one of openings (225) or slits.

8. A cleaning article comprising the composite fabric (220) of claim 7, wherein at least of portion of fibers in the nonwoven fabric layer (222) are hydrophilic fibers, elastic fibers, multi-component fibers having at least one hydrophilic component, or a combination thereof.

9. The cleaning article of claim 8, further comprising a sponge to which the nonwoven fabric layer (222) is attached.

10. A method of forming the composite fabric (20, 220, 320) of any one of claims 1 to 4, the method comprising:
forming a fiber layer comprising a mat (106) of at least partially unconsolidated fibers;
positioning the structured film layer (30, 130) and the fiber layer to provide the overlapping area; and
discontinuously bonding the mat (106) to form the nonwoven fabric layer (22) while simultaneously bonding the structured film layer (30, 130) to the nonwoven fabric layer (22).

11. The method of claim 10, further comprising unwinding the structured film layer (30, 130) from a roll before positioning the structured film layer (30, 130) and the fiber layer.

12. The method of claim 10 or 11, further comprising at least one of disposing a second fabric layer adjacent to the mat (106) of at least partially unconsolidated fibers or disposing a film layer between the mat (106) of at least partially unconsolidated fibers and the structured film layer (30, 130).

13. The method of any one of claims 10 to 12, wherein discontinuous bonding is performed with a technique selected from the group consisting of calendering, ultrasonic welding, and thermal bonding.

14. The method of any one of claims 10 to 13, wherein the mat (106) is partially, randomly bonded before discontinuously bonding the mat (106) while simultaneously bonding the structured film layer (30, 130).

15. The method of any one of claims 10 to 14, further comprising at least one of annealing at least one of the structured film layer (30, 130) or fiber layer, forming the structured film layer (30, 130) or fiber layer with discontinuous polymer phases, diluents, or plasticizers, or processing the fiber layer to reduce orientation of the polymer in the at least partially unconsolidated fibers.

## Patentansprüche

1. Ein Verbundgewebe (20, 220, 320), aufweisend:
eine Vliesstoffschicht (22, 222, 322), und
eine strukturierte Filmschicht (30, 230, 330), die diskontinuierlich mit der Vliesstoffschicht (22, 222, 322) verbunden ist,
wobei die strukturierte Schicht (30, 230, 330) aufrechtstehende Pfosten aufweist, wobei Fasern der Vliesstoffschicht (22, 222, 322) miteinander verbunden sind und die strukturierte Filmschicht (30, 230, 330) über mindestens einen Satz übereinstimmender Verbindungsstellen (40, 240, 340) in einem Überlappungsbereich der Vliesstoffschicht (22, 222, 322) und der strukturierten Filmschicht (30, 230, 330) mit der Vliesstoffschicht (22, 222, 322) verbunden ist, und
wobei die Vliesstoffschicht (22, 222, 322) nicht verbundene Bereiche aufweist, aber kein anderes Verbindungsmuster im Überlappungsbereich aufweist, das sich von dem mindestens einen Satz übereinstimmender Verbindungsstellen (40, 240, 340) unterscheidet.

2. Das Verbundgewebe (20, 220, 320) nach Anspruch 1, wobei an den übereinstimmenden Verbindungsstellen (40, 240, 340) der strukturierten Filmschicht die aufrechtstehenden Pfosten fehlen.

3. Das Verbundgewebe (20, 220, 320) nach Anspruch 1 oder 2, wobei die strukturierte Filmschicht (30, 230, 330) einen Beta-Keimbildner aufweist.

4. Das Verbundgewebe (20, 220, 320) nach einem der Ansprüche 1 bis 3, wobei die Vliesstoffschicht (22, 222, 322) mindestens eines aus gesponnenen Fasern, kardierten Fasern oder schmelzgeblasenen Fasern aufweist.

5. Das Verbundgewebe (20, 220, 320) nach einem der Ansprüche 1 bis 4, ferner aufweisend mindestens eines aus einer zweiten Gewebeschicht benachbart zur Vliesstoffschicht (22, 222, 322) oder einer Filmschicht zwischen der Vliesstoffschicht (22, 222, 322) und der strukturierten Filmschicht (30, 230, 330).

6. Das Verbundgewebe (20, 220, 320) nach Anspruch 5, wobei die zweite Gewebeschicht Oberflächenschleifen aufweist.

7. Das Verbundgewebe (220) nach einem der Ansprüche 1 bis 4, wobei die strukturierte Filmschicht (230) mit zumindest einem aus Öffnungen (225) oder Schlitzen bereitgestellt ist.

8. Ein Reinigungsartikel, aufweisend das Verbundgewebe (220) nach Anspruch 7, wobei mindestens ein Abschnitt der Fasern in der Vliesstoffschicht (222) hydrophile Fasern, elastische Fasern, Mehrkomponentenfasern, die zumindest eine hydrophile Komponente aufweisen, oder eine Kombination davon ist.

9. Der Reinigungsartikel nach Anspruch 8, ferner aufweisend einen Schwamm, an dem die Vliesstoffschicht (222) angebracht ist.

10. Ein Verfahren zum Bilden des Verbundgewebes (20, 220, 320) nach einem der Ansprüche 1 bis 4, wobei das Verfahren aufweist:
Bilden einer Faserschicht, die eine Matte (106) aus zumindest teilweise unverfestigten Fasern aufweist;
Positionieren der strukturierten Filmschicht (30, 130) und der Faserschicht, um den Überlappungsbereich bereitzustellen; und
diskontinuierliches Verbinden der Matte (106), um die Vliesstoffschicht (22) bei gleichzeitigem Verbinden der strukturierten Filmschicht (30, 130) mit der Vliesstoffschicht (22) zu bilden.

11. Das Verfahren nach Anspruch 10, ferner aufweisend das Abwickeln der strukturierten Filmschicht (30, 130) von einer Rolle vor dem Positionieren der strukturierten Filmschicht (30, 130) und der Faserschicht.

12. Das Verfahren nach Anspruch 10 oder 11, ferner aufweisend zumindest eines aus einem Anordnen einer zweiten Gewebeschicht benachbart zur Matte (106) aus zumindest teilweise unverfestigten Fasern oder Anordnen einer Filmschicht zwischen der Matte (106) aus zumindest teilweise unverfestigten Fasern und der strukturierten Filmschicht (30, 130).

13. Das Verfahren nach einem der Ansprüche 10 bis 12, wobei das diskontinuierliche Verbinden mit einer Technik durchgeführt wird, die ausgewählt ist aus der Gruppe bestehend aus Kalandrieren, Ultraschallschweißen und thermischem Verbinden.

14. Das Verfahren nach einem der Ansprüche 10 bis 13, wobei die Matte (106) teilweise zufällig verbunden wird, bevor die Matte (106) diskontinuierlich verbunden wird, während gleichzeitig die strukturierte Filmschicht (30, 130) verbunden wird.

15. Das Verfahren nach einem der Ansprüche 10 bis 14, ferner aufweisend zumindest eines aus Tempern von mindestens einem aus der strukturierten Filmschicht (30, 130) oder der Faserschicht, Bilden der strukturierten Filmschicht (30, 130) oder der Faserschicht mit diskontinuierlichen Polymerphasen, Verdünnungsmitteln oder Weichmachern oder Verarbeiten der Faserschicht, um die Orientierung des Polymers in den zumindest teilweise unverfestigten Fasern zu reduzieren.

## Revendications

1. Tissu composite (20, 220, 320) comprenant :
une couche de tissu non-tissé (22, 222, 322), et
une couche de film structurée (30, 230, 330) liée de manière discontinue à la couche de tissu non tissé (22, 222, 322) ;
dans lequel la couche de film structurée (30, 230, 330) comprend des montants dressés, dans lequel les fibres de la couche de tissu non tissé (22, 222, 322) sont liées les unes aux autres, et la couche de film structurée (30, 230, 330) est liée à la couche de tissu non tissé (22, 222, 322) par le biais d'au moins un ensemble de sites de liaison confondus (40, 240, 340) dans une zone de chevauchement de la couche de tissu non tissé (22, 222, 322) et de la couche de film structurée (30, 230, 330), et
dans lequel la couche de tissu non-tissé (22, 222, 322) comprend des zones non liées mais ne comporte pas d'autre motif de liaison dans la zone de chevauchement distinct de l'au moins un ensemble de sites de liaison confondus (40, 240, 340).

2. Tissu composite (20, 220, 320) selon la revendication 1, dans lequel dans les sites de liaison confondus (40, 240, 340), la couche de film structurée est dépourvue des montants dressés.

3. Tissu composite (20, 220, 320) selon la revendication 1 ou 2, dans lequel la couche de film structurée (30, 230, 330) comprend un agent de nucléation bêta.

4. Tissu composite (20, 220, 320) selon l'une quelconque des revendications 1 à 3, dans lequel la couche de tissu non tissé (22, 222, 322) comprend au moins l'une parmi des fibres filées, des fibres cardées, ou des fibres obtenues par fusion-soufflage.

5. Tissu composite (20, 220, 320) selon l'une quelconque des revendications 1 à 4, comprenant en outre au moins l'une d'une deuxième couche de tissu adjacente à la couche de tissu non tissé (22, 222, 322) ou d'une couche de film entre la couche de tissu non tissé (22, 222, 322) et la couche de film structurée (30, 230, 330).

6. Tissu composite (20, 220, 320) selon la revendication 5, dans lequel la deuxième couche de tissu comprend des boucles de surface.

7. Tissu composite (220) selon l'une quelconque des revendications 1 à 4, dans lequel la couche de film structurée (230) est pourvue d'au moins une d'ouvertures (225) ou fentes.

8. Article de nettoyage comprenant le tissu composite (220) selon la revendication 7, dans lequel au moins une partie des fibres dans la couche de tissu non tissé (222) est constituée de fibres hydrophiles, de fibres élastiques, de fibres à composants multiples présentant au moins un composant hydrophile, ou une combinaison de ceux-ci.

9. Article de nettoyage selon la revendication 8, comprenant en outre une éponge sur laquelle la couche de tissu non tissé (222) est fixée.

10. Procédé de fabrication du tissu composite (20, 220, 320) selon l'une quelconque des revendications 1 à 4, le procédé comprenant :
la formation d'une couche de fibres comprenant un tapis (106) de fibres au moins partiellement non consolidées ;
le positionnement de la couche de film structurée (30, 130) et de la couche de fibres pour fournir la zone de chevauchement ; et
la liaison de manière discontinue du tapis (106) pour former la couche de tissu non tissé (22) tout en liant simultanément la couche de film structurée (30, 130) à la couche de tissu non tissé (22).

11. Procédé selon la revendication 10, comprenant en outre le déroulement de la couche de film structurée (30, 130) depuis un rouleau avant de positionner la couche de film structurée (30, 130) et la couche de fibres.

12. Procédé selon la revendication 10 ou 11, comprenant en outre au moins une étape consistant à disposer une deuxième couche de tissu adjacente au tapis (106) de fibres au moins partiellement non consolidées ou à disposer une couche de film entre le tapis (106) de fibres au moins partiellement non consolidées et la couche de film structurée (30, 130).

13. Procédé selon l'une quelconque des revendications 10 à 12, dans lequel la liaison discontinue est effectuée avec une technique choisie dans le groupe constitué par le calandrage, le soudage par ultrasons, et la liaison thermique.

14. Procédé selon l'une quelconque des revendications 10 à 13, dans lequel le tapis (106) est partiellement, lié de manière aléatoire avant la liaison discontinue du tapis (106) tout en liant simultanément la couche de film structurée (30, 130).

15. Procédé selon l'une quelconque des revendications 10 à 14, comprenant en outre au moins une opération parmi le recuit d'au moins l'une de la couche de film structurée (30, 130) ou de la couche de fibres, la formation de la couche de film structurée (30, 130) ou de la couche de fibres avec des phases de polymère discontinues, des diluants, ou des plastifiants, ou le traitement de la couche de fibres pour réduire l'orientation du polymère dans les fibres au moins partiellement non consolidées.
